# FASCICULE DE BREVET EUROPEEN

(11) **EP 0 836 702 B1**
(45) Date de publication et mention de la délivrance du brevet: **20.01.1999**
(21) Numéro de dépôt: 96924938.2
(22) Date de dépôt: 04.07.1996
(51) Int. Cl.: G01F 15/00

(54) **ORGANE DE COUPURE A CLAPET ANTIFEU POUR COMPTEUR DE GAZ ET COMPTEUR DE GAZ EQUIPE D'UN TEL ORGANE DE COUPURE**
DURCHFLUSSUNTERBRECHER MIT FEUERSCHUTZVENTIL FÜR GASZÄHLER
CUT-OFF MEMBER WITH A FIRE-PROTECTION VALVE FOR A GAS METER, AND GAS METER PROVIDED THEREWITH

(30) Priorité: 05.07.1995 FR 9508113
(43) Date de publication de la demande: 22.04.1998
(73) Titulaire: SCHLUMBERGER INDUSTRIES S.A., 92120 Montrouge (FR)
(72) Inventeur: HEC, Michel, F-78420 Carrières-sur-Seine (FR); CHAMPOUGNY, Jean-Luc, 51200 Epernay (FR)
(86) Numéro de dépôt international: FR9601047
(87) Numéro de publication internationale: WO9702472

(56) Documents cités:
- EP-A- 0 264 856
- US-A- 5 007 453

## Description

La présente invention est relative à un organe de coupure d'un flux de gaz pour compteur de gaz comprenant un clapet mobile par rapport à un siège de clapet qui définit une ouverture pour le passage du dit flux de gaz, ledit clapet comprenant, d'une part, une membrane comportant une surface principale qui vient en contact par une partie de celle-ci appelée zone de contact avec ledit siège de clapet lorsque l'organe de coupure est en position fermée, obturant ainsi par sa surface principale la dite ouverture et, d'autre part, une pièce formant support mécanique de membrane qui coopère avec ladite membrane.

Dans les compteurs de gaz, notamment dans les compteurs de gaz dits domestiques, il est connu d'installer un organe de coupure du flux de gaz en amont de la chambre de mesure dudit compteur pour assurer la sécurité.
Par exemple, en cas de fuite de gaz, les compteurs de gaz détectent un débit de fuite ce qui déclenche automatiquement la coupure du flux de gaz par l'organe de coupure.
En outre, un tel organe de coupure est également utilisé lorsque le compteur de gaz est équipé d'un système à prépaiement afin de couper le flux de gaz quand le crédit de l'utilisateur est épuisé.
On connaît par exemple un organe de coupure pour compteur de gaz comprenant un clapet mobile par rapport à un siège de clapet et dans lequel le clapet est constitué d'une membrane élastique de forme hémisphérique qui est articulée autour d'un pivot formant une liaison rotule.
Lorsqu'un feu se déclenche il est prévu que l'organe de coupure soit activé en position de fermeture pour couper le flux de gaz.
Or, avec un organe de coupure tel que décrit ci-dessus, la membrane élastique fond à température élevée et le clapet ne peut de ce fait plus remplir la fonction d'étanchéité demandée à l'organe en position de fermeture, ce qui présente un inconvénient majeur.
On connaît un autre type d'organe de coupure dans lequel le clapet est principalement formé d'une pièce centrale articulée autour d'un pivot, d'un ressort sensiblement plan fixé autour de ladite pièce centrale et d'une membrane élastique recouvrant comme un capuchon la pièce centrale et le ressort et venant recouvrir la partie périphérique dudit ressort.
A température élevée, l'organe activé en position de fermeture vient obturer le siège de clapet et la membrane fond si bien que la pièce centrale et le ressort du clapet se trouvent exposés au flux de gaz et ne peuvent assurer la fonction d'étanchéité.
Parfois, la membrane d'un clapet dans un organe de coupure n'est pas toujours parfaitement étanche pour diverses raisons liées par exemple au matériau constitutif de la membrane ou, au procédé de fabrication de la membrane.
Pour ces raisons, il peut être intéressant de concevoir un clapet qui puisse pallier aux défauts d'étanchéité de la membrane quelles que soient les températures.
La présente invention vise donc à remédier à au moins un des problèmes exposés ci-dessus en proposant un organe de coupure d'un flux de gaz pour compteur de gaz qui soit simple de conception et permette d'assurer la fonction d'étanchéité vis-à-vis du flux de gaz.
La présente invention a donc pour objet un organe de coupure d'un flux de gaz pour compteur de gaz comprenant un clapet mobile par rapport à un siège de clapet qui définit une ouverture pour le passage dudit flux de gaz, ledit clapet comprenant, d'une part, une membrane comportant une surface principale qui vient en contact par une partie de celle-ci appelée zone de contact avec ledit siège de clapet lorsque l'organe de coupure est en position fermée, obturant ainsi par sa surface principale la dite ouverture et, d'autre part, une pièce formant support mécanique de membrane qui coopère avec ladite membrane, caractérisé en ce que la pièce métallique formant support de membrane possède une surface continue étanche délimitée par la zone de contact de manière à obturer l'ouverture en cas de non étanchéité de la membrane.
Aux températures élevées, lorsque la membrane commence à fondre, la surface continue étanche de la pièce métallique formant support de membrane vient se positionner contre le siège de clapet au droit de la zone de contact de la membrane par une partie de sa surface continue et en regard de l'ouverture du siège de clapet, ladite pièce vient ainsi obturer l'ouverture dudit siège de clapet, assurant donc l'étanchéité vis-à-vis du gaz.
Il convient de noter que cette conception du clapet est également avantageuse quelle que soit la température dans le cas où la membrane n'est pas parfaitement étanche.

La pièce formant support de membrane repose en équilibre sur un pivot et est ainsi placée entre la membrane et ledit pivot.
Le fait d'avoir une telle pièce juste posée sur un pivot et qui s'articule autour de ce pivot permet d'assurer de manière simple l'étanchéité de ladite pièce vis-à-vis du gaz.
Il n'est pas possible d'obtenir une telle étanchéité avec les pièces support de membrane de l'art antérieur qui sont toujours solidaires de leur pivot et constituées de plusieurs éléments assemblés entre eux.
En raison du fait que plusieurs éléments entrent dans la constitution de ces pièces on rencontre des problèmes d'étanchéité aux endroits où ces éléments sont liés entre eux. En outre, ces pièces sont compliquées à réaliser et à assembler.
De préférence, la pièce formant support de membrane est centrée sur le pivot.
Le pivot possède par exemple un embout à portée sphérique.
Pour assurer un bon équilibre, la pièce formant support de membrane présente en regard du pivot une cavité dans laquelle vient se loger ledit pivot.
Pour améliorer la coopération entre la membrane et la pièce formant support de membrane, ladite membrane est en appui sur la pièce formant support de membrane au droit de la cavité.
Celà permet de plus de maintenir la pièce formant support de membrane contre son pivot.
Afin d'assurer une meilleure étanchéité au gaz lorsque l'organe est en position fermée et que la membrane commence à fondre, la pièce formant support de membrane possède une portée tronconique située en regard de la zone de contact et qui vient donc en contact étanche avec le siège de clapet.
La pièce formant support de membrane a par exemple une forme de disque.
La portée tronconique du disque est disposée entre une partie centrale et une partie périphérique sensiblement planes.
La pièce formant support de membrane est en contact par une de ses faces avec la membrane et par sa face opposée avec un anneau de maintien emmanché autour d'un élément qui prolonge le pivot, ladite membrane formant un capuchon qui recouvre la pièce formant support de membrane et vient enserrer l'empilage constitué par ladite pièce et ledit anneau en recouvrant une partie périphérique de la face de l'anneau qui n'est pas en contact avec ladite pièce.
Plus précisément, le clapet est relié à un axe de clapet aligné suivant une direction longitudinale et mobile suivant cette direction sous l'action d'un moteur entraînant ledit axe de clapet au moyen d'un dispositif d'entraînement mécanique qui laisse à l'axe de clapet un degré de liberté en translation selon cette direction.
Selon une caractéristique additionnelle, un organe élastique comprimé coopère avec un élément dit fusible réalisé dans un matériau fondant sous l'action de la chaleur de telle façon qu'en dessous de la température de fusion dudit matériau l'organe élastique est maintenu comprimé, et aux environs de la température de fusion du matériau l'organe élastique est libéré, forçant ainsi le clapet à entrer en contact avec le siège de clapet.
Ainsi, en combinant cette caractéristique de fermeture rapide de l'organe de coupure avec la surface continue étanche de la pièce formant support de membrane du clapet on obtient un organe de coupure anti-feu simple et particulièrement efficace.
Une pièce liée à l'axe de clapet est soumise à l'action de l'organe élastique tendant à rapprocher le clapet du siège de clapet, et est retenue dans sa position au moyen de l'élément fusible.

Selon un exemple de réalisation, l'axe de clapet est fileté et la pièce liée à l'axe de clapet forme un écrou dans lequel est engagé ledit axe de clapet, ladite pièce formant écrou est logée dans un orifice pratiqué dans une embase et comprend un épaulement ,l'organe élastique étant comprimé entre ladite embase et ledit épaulement de manière à exercer sur ladite pièce un effort qui tend à la rapprocher du siège de clapet.

La pièce formant écrou traverse l'orifice et fait saillie hors de l'embase du coté opposé où se trouve l'organe élastique, l'élément dit fusible étant maintenu en appui contre ladite embase et exerçant sur ladite pièce un effort qui tend à l'éloigner du siège de clapet.

Selon un autre exemple de réalisation, l'élément fusible est placé entre le clapet et l'organe élastique qui est en appui sur un support, ledit élément fusible se trouvant en contact direct avec ledit organe élastique pour le maintenir comprimé contre son support.

L'axe de clapet coulisse dans un palier monté sur le support, et l'élément fusible forme une collerette disposée autour dudit palier, l'organe élastique étant comprimé entre cette collerette et ledit support.

La présente invention a également pour objet un compteur de gaz équipé d'un organe de coupure d'un flux de gaz comprenant un clapet mobile par rapport à un siège de clapet qui définit une ouverture pour le passage du dit flux de gaz, ledit clapet comprenant, d'une part, une membrane comportant une surface principale qui vient en contact par une partie de celle-ci appelée zone de contact avec ledit siège de clapet lorsque l'organe de coupure est en position fermée, obturant ainsi par sa surface principale la dite ouverture et, d'autre part, une pièce formant support mécanique de membrane qui coopère avec ladite membrane, caractérisé en ce que la pièce métallique formant support de membrane possède une surface continue étanche délimitée par la zone de contact de manière à obturer l'ouverture en cas de non étanchéité de la membrane.

L'organe de coupure peut comporter les caractéristiques mentionnées ci-dessus.

D'autres caractéristiques et avantages apparaîtront au cours de la description qui va suivre donnée à titre d'exemple non limitatif et faite en référence aux dessins annexés sur lesquels :
- la figure 1 est une vue simplifiée d'un compteur de gaz équipé d'un organe de coupure selon l'invention,
- la figure 1a est une vue schématique en coupe d'un mode réalisation de l'organe de coupure selon l'invention.
- la figure 2 est une vue schématique en coupe d'un autre mode réalisation de l'organe de coupure selon l'invention.
- la figure 3 est une vue schématique en coupe d'une variante du premier mode de réalisation de l'organe de coupure selon l'invention,
- la figure 4 est une vue schématique en coupe d'une variante du second mode de réalisation de l'organe de coupure selon l'invention.

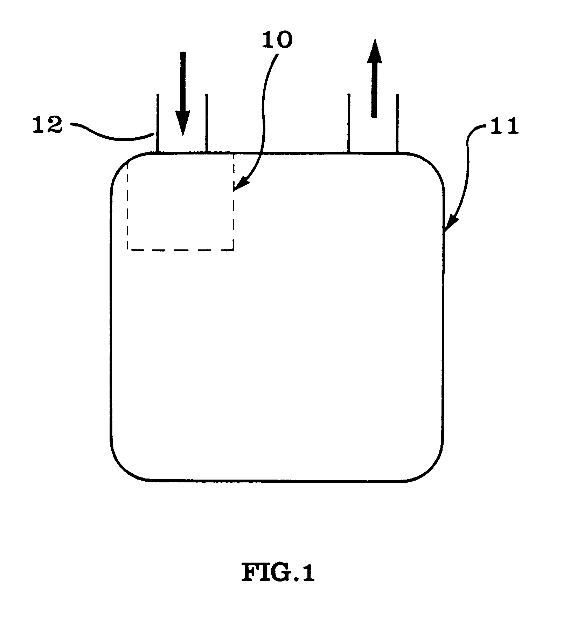

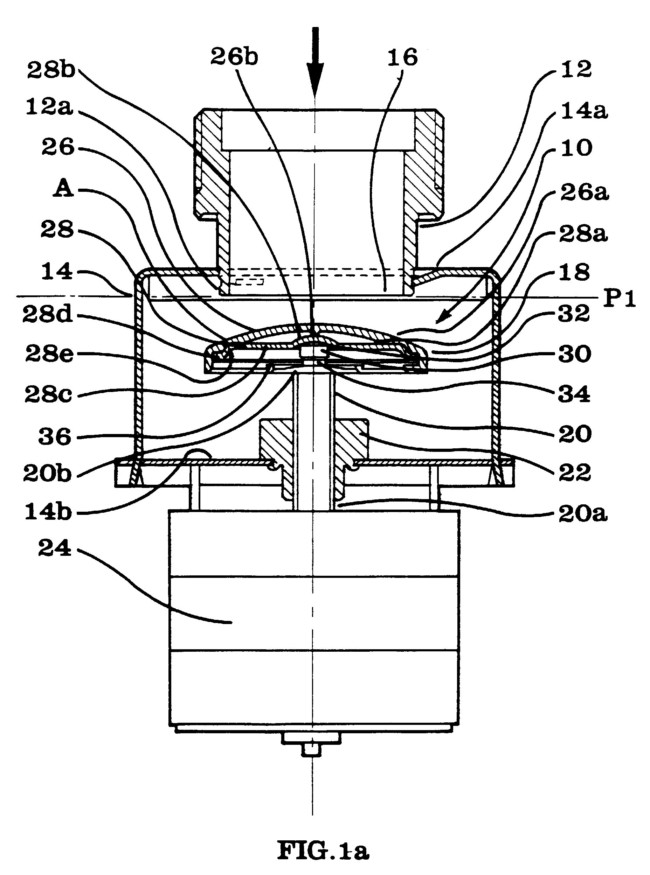

Comme représenté sur la figure 1 et désigné par la référence générale notée 10, un organe de coupure selon un mode réalisation de l'invention est disposé à l'intérieur d'un compteur de gaz 11 dont on a indiqué le raccord d'amenée de gaz 12.
L'organe de coupure est disposé à l'intérieur d'un châssis métallique 14 qui est solidaire par sa partie supérieure 14a du raccord d'amenée de gaz 12 (Fig 1a).
Le raccord 12 forme par son extrémité inférieure en contact avec la partie supérieure 14a du châssis 14 un siège de clapet 12a qui définit une ouverture 16 de section de passage circulaire pour le passage du flux de gaz.

L'amenée de gaz se fait dans le sens indiqué par la flèche sur les figures 1 et 1a. Lorsque le flux de gaz débouche hors du raccord d'amenée de gaz 12 à l'intérieur du châssis 14, ledit flux de gaz peut sortir dudit châssis par des ouvertures (non visibles sur la figure) disposées dans un plan parallèle à celui de cette figure.

Le clapet 18 de l'organe de coupure 10 est monté sur un axe 20 dit axe de clapet, perpendiculaire à un plan P1 qui contient l'ouverture 16 définie par le siège de clapet.
L'axe de clapet 20 possède une partie filetée qui est montée dans une pièce 22 formant écrou et qui est fixée dans la partie inférieure 14b du châssis 14, appelée embase, par exemple par sertissage.
Un moteur 24 qui peut être avantageusement du type pas à pas, est placé à une des extrémités 20a de l'axe du clapet 20 qui est la plus éloignée du clapet 18.
Le moteur 24 entraîne ainsi en rotation l'axe du clapet 20 qui a un mouvement hélicoïdal et permet la montée et la descente du clapet 18 et donc la fermeture et l'ouverture de l'organe de coupure.
Le clapet 18 comprend une membrane 26 en appui sur une pièce métallique 28 formant support de membrane.
La membrane 26 possède une surface principale 26a de forme convexe tournée en direction de l'ouverture 16 et dont une partie appelée zone de contact A vient en contact avec le siège de clapet 12a lorsque l'organe de coupure est en position fermée.
Dans cette position, la majeure partie de la surface principale 26a de la membrane 26 est située en face de l'ouverture 16 et vient donc obturer celle-ci.
Tel que représenté sur la figure la, la pièce 28 formant support de membrane possède une surface continue étanche 28a disposée en vis-à-vis de la partie concave de la membrane 26.
La pièce 28 formant support de membrane s'étend dans une direction contenue dans un plan parallèle au plan P1 sur une dimension au moins égale au diamètre externe du siège de clapet 12a de manière à ce que la surface continue 28a soit située au droit du siège de clapet et de l'ouverture 16.
La pièce 28 formant support de membrane et qui a par exemple la forme générale d'un disque repose en équilibre sur un pivot 30 solidaire de l'axe de clapet 20 et est centrée sur ce pivot.
Comme représenté sur la figure la, le pivot 30 possède un embout 32 à portée sphérique qui permet d'obtenir un bon contact avec la pièce 28 et lui assure une liaison de type rotule. Une telle liaison permet de compenser les défauts de perpendicularité entre l'axe du clapet 20 et le siège de clapet 12a et donc concourt à assurer une meilleure étanchéité.
La pièce 28 formant support de membrane possède en son centre, face au pivot 30 ,une cavité 28b formée par exemple par emboutissage et dont la concavité est tournée vers ledit pivot.
L'embout sphérique 32 du pivot vient ainsi se loger dans la concavité 28b de la pièce 28.
La pièce 28 formant support de membrane possède une partie centrale 28c et une partie périphérique 28d toutes deux sensiblement planes et qui se rejoignent par une partie médiane 28e placée au droit de la zone de contact A. La partie médiane 28e a une forme tronconique (le sommet du cône étant situé vers le haut de la figure) lui permettant de bien s'adapter sur le siège de clapet 12a et ainsi d'améliorer l'étanchéité par rapport à une pièce formant support de membrane dont la surface continue aurait une forme sensiblement plane.
L'axe du clapet 20 comporte à son extrémité 20b une contre-dépouille 34 disposée sous le pivot 30.

Un anneau de maintien 36 est emmanché autour de la contre-dépouille 34 en laissant un jeu mécanique entre ledit anneau et celle-ci pour permettre à la liaison de type rotule d'assurer sa fonction.
La contre-dépouille 34 a un diamètre inférieur au diamètre dudit pivot afin d'empêcher un éventuel déplacement axial de l'anneau de maintien.
La pièce 28 formant support de membrane est en contact par une de ses faces qui est tournée vers le haut avec la membrane 26a au droit de la partie périphérique 28d, de la partie médiane 28e, de la périphérie de la partie centrale 28c ainsi qu'au droit de cavité 28b.
En effet, la membrane 26 possède en vis-à-vis de la partie convexe de la cavité 28b un bossage 26b qui s'appuie sur la dite partie convexe.
La pièce 28 formant support de membrane est en contact par sa face opposée qui est tournée vers le bas avec l'anneau de maintien 36 ce qui assure à la dite pièce un bon contact avec la membrane 26.
La pièce 28 formant support de membrane et l'anneau de maintien constituent un empilage et la membrane 26 forme une sorte de capuchon qui recouvre la pièce 28 et vient enserrer ledit empilage en recouvrant une partie périphérique de la face de l'anneau qui est tournée vers le bas.
L'anneau de maintien 36 sert à lier le clapet avec l'axe du clapet 20.

Lorsqu'un feu se déclare et que la température s'élève, le clapet 18 vient rapidement en butée supérieure contre le siège de clapet 12a.
Étant donné que le matériau constitutif de la membrane commence à fondre, celle-ci ne peut plus assurer l'étanchéité.
Cependant, l'étanchéité au gaz est assurée par la surface continue 28a de la pièce métallique 28 qui vient s'appuyer contre le siège de clapet 12a par une partie de cette surface, l'autre partie de ladite surface servant à obturer l'ouverture 16. Cette étanchéité est renforcée par la forme tronconique de la partie médiane 28e. Il convient de noter que l'utilisation d'un moteur du type pas à pas permet avantageusement de faire effectuer audit moteur encore quelques pas après avoir obtenu le contact entre la surface continue étanche 28a et le siège de clapet 12a afin de parfaire l'étanchéité.

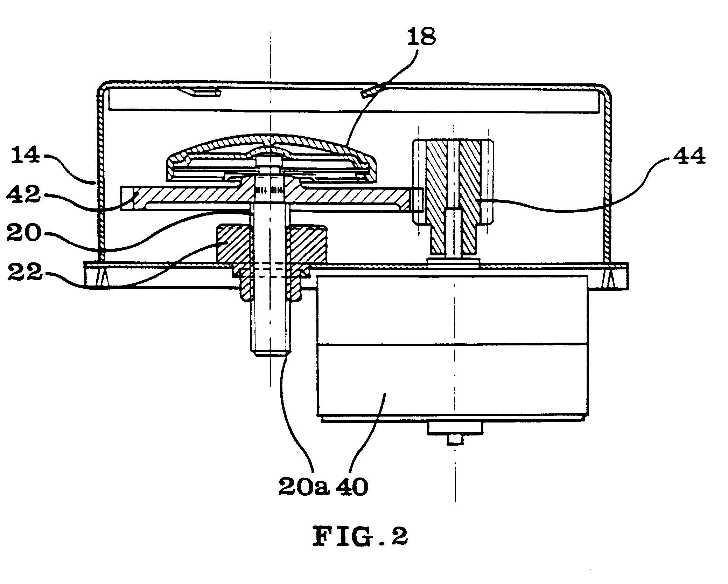

La figure 2 représente un autre mode de réalisation dans lequel un moteur pas à pas 40 transmet un mouvement de rotation à l'axe de clapet 20 par l'intermédiaire d'un dispositif d'entraînement mécanique.
Ce dispositif est par exemple constitué d'une couronne dentée 42 emmanchée sur l'axe de clapet 20 et qui coopère avec un pignon d'entraînement 44 qui est relié au moteur 40, ledit moteur entraînant en rotation ledit pignon 44 autour d'un second axe parallèle à l'axe de clapet 20.
Le pignon d'entraînement 44 représenté sur la figure 2 a une dimension dans une direction parallèle à l'axe de clapet, appelée hauteur, qui correspond au déplacement axial du clapet et la couronne 42 a une hauteur plus faible pour des raisons d'encombrement.
Toutefois , dans les compteurs de gaz où l'on dispose d'une place suffisante, il est possible que le pignon et la couronne dentée aient sensiblement la même hauteur ou bien que seule la couronne dentée soit d'une hauteur qui corresponde au déplacement axial du clapet.
Le pignon 44 a par exemple treize dents et la couronne 42 a par exemple cinquante cinq dents.
Le pignon et la couronne portent tous deux une denture droite mais celle-ci pourrait également être hélicoïdale.
Sur cette figure, la couronne dentée 42 est disposée entre le clapet 18 et la pièce formant écrou 22, assurant ainsi un encombrement minimal.
Cependant, il est possible de disposer la couronne dentée 42 sous la pièce formant écrou 22, près de l'extrémité de l'axe de clapet qui est opposée à celle où se trouve le clapet 18.

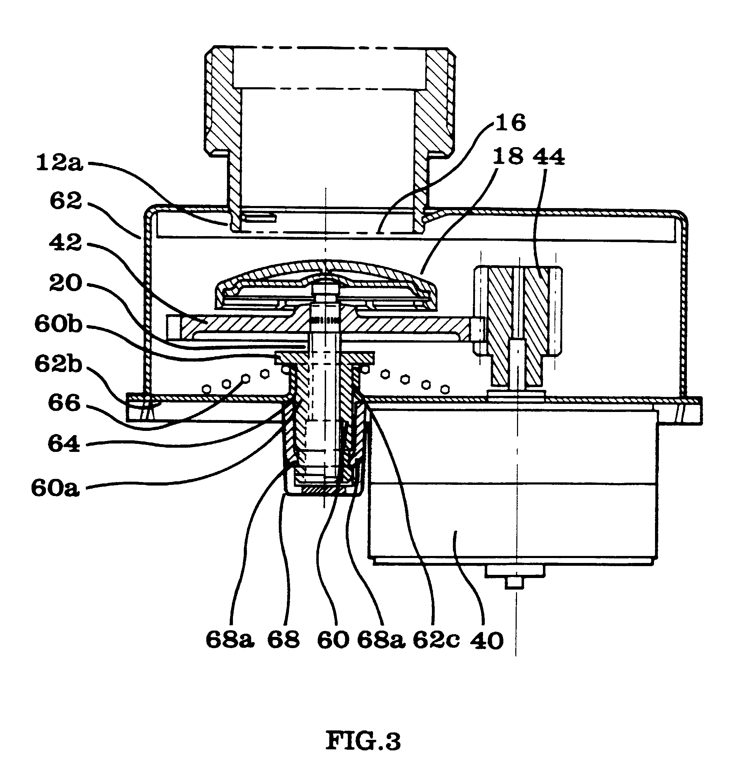

Comme représenté sur la figure 3 (sur cette figure les références des éléments qui n'ont pas été modifiés sont conservées), la pièce formant écrou 60 est constituée d'un manchon cylindrique 60a pourvu à son extrémité supérieure d'un épaulement 60b.
Le châssis métallique 62 comprend une embase 62b dans laquelle est pratiqué un orifice 64 qui reçoit le manchon cylindrique 60a de la pièce formant écrou. Un rebord annulaire 62c est prévu à la périphérie du manchon 60a pour servir d'appui à l'épaulement 60b de la pièce formant écrou 60.
Un organe élastique tel qu'un ressort hélicoïdal 66 est maintenu en position comprimée entre l'embase 62b et l'épaulement 60b et exerce donc sous l'épaulement un effort dirigé vers le haut destiné à amener le clapet 18 en contact avec son siège 12a.
Le manchon cylindrique 60a traverse l'orifice 64 et débouche de l'autre coté de l'embase 62b .
Un élément dit fusible 68 réalisé dans un matériau fondant sous l'action de la chaleur est placé sous l'embase 62b en appui contre celle-ci et exerce sur la pièce formant écrou un effort qui tend à compenser l'effort de compression de l'organe élastique 66.
L'élément fusible 68 en plastique dur a par exemple une forme générale de gobelet coiffant la partie du manchon 62a qui fait saillie par rapport à l'embase de manière à venir en appui contre ladite embase par un rebord et qui comporte plusieurs griffes 68a rentrées vers l'intérieur dudit gobelet de façon à s'engager dans une gorge 60c ménagée sur la surface extérieure du manchon cylindrique 60a, empêchant ainsi ledit manchon de se diriger vers le haut sous l'influence du ressort 66.
Lorsqu'un feu se déclare en amont du compteur, la chaleur régnant dans l'environnement de l'organe de coupure se transmet à l'élément fusible 68 qui se met à fondre. Les griffes 68a perdent de leur rigidité et ne peuvent donc plus compenser l'effort exercé par le ressort 66 qui pousse fortement sur l'épaulement 60b.
Étant donné que la pièce formant écrou 60, l'axe de clapet 20 et le clapet 18 sont solidaires l'un de l'autre, l'effort de poussée sur l'épaulement se transmet à l'axe de clapet qui monte et amène le clapet en contact avec le siège de clapet 12a, assurant ainsi l'étanchéité.
On notera toutefois que ce système de fermeture rapide de l'organe de coupure en cas de feu à proximité du compteur de gaz est envisageable avec tout dispositif d'entraînement en rotation de l'axe de clapet par le moteur qui autorise au clapet et à son axe un degré de liberté en translation suivant la direction longitudinale de déplacement du clapet.

Comme l'élément fusible 68 est relié au siège de clapet 12a par l'intermédiaire du châssis métallique 62, la chaleur régnant à proximité de l'ouverture 16 se transmet rapidement par conduction thermique à travers le métal du châssis et accélère la fusion dudit élément fusible.

Il est possible de prévoir que la pièce formant écrou 22 (resp. 60) représentée sur les figures 1a et 2 (resp. fig. 3) soit remplacée par une pièce formant un palier lisse qui n'a qu'une fonction de guidage en translation de l'axe de clapet.

Le dispositif d'entraînement mécanique de l'axe de clapet 20 à partir du moteur en laissant un degré de liberté en translation suivant la direction longitudinale de déplacement du clapet 18, ne se limite pas à ce qui vient d'être décrit.
En effet, ce dispositif peut par exemple être constitué d'une courroie lisse ou crantée montée sur l'axe de clapet et sur l'axe sortant du moteur.

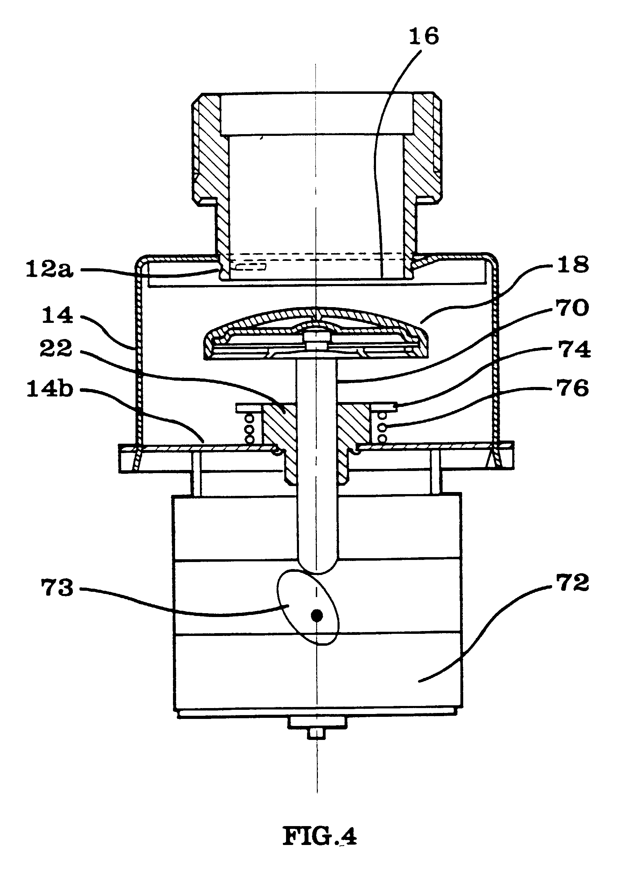

Ainsi que représenté à la figure 4 (sur cette figure, les références des éléments inchangés de la figure 1 ont été reprises) l'axe de clapet 70 coulisse dans un palier lisse 22 monté dans l'embase 14b du châssis métallique 14 par exemple par sertissage.
L'axe de clapet 70 est relié à l'axe de sortie du moteur 72 (cet axe est perpendiculaire au plan de la figure 4) au moyen d'une came 73 sur laquelle repose par l'effet de son poids ledit axe de clapet. La came sert à transformer le mouvement de rotation dudit axe de sortie du moteur en un mouvement de translation.
Un fusible 74 réalisé dans un matériau fondant sous l'action de la chaleur est disposé entre le clapet 18 et un organe élastique 76 se présentant sous la forme d'un ressort hélicoïdal et qui vient en appui sur un support qui correspond à l'embase 14b.
L'élément fusible 74 est en contact direct avec le ressort 76 et maintient celui-ci comprimé contre l'embase 14b.
L'élément fusible a une forme de collerette 74 rapportée à la périphérie du palier 22 par exemple par collage.

Lorsque la température régnant autour de l'organe de coupure atteint la température de fusion du matériau constitutif de l'élément fusible, la collerette fond et le ressort libéré vient en contact avec la partie inférieure du clapet 18 et pousse celui-ci vers le haut jusqu'à ce qu'il entre en contact avec le siège de clapet 12a.

On notera que l'on peut également, par exemple, utiliser le dispositif d'entraînement mécanique représenté à la figure 3 avec l'organe élastique et l'élément fusible de la figure 4.

## Revendications

1. Organe de coupure (10) d'un flux de gaz pour compteur de gaz (11) comprenant un clapet (18) mobile par rapport à un siège de clapet (12a) qui définit une ouverture (16) pour le passage du dit flux de gaz, ledit clapet comprenant, d'une part, une membrane (26) comportant une surface principale (26a) qui vient en contact par une partie de celle-ci appelée zone de contact (A) avec ledit siège de clapet lorsque l'organe de coupure est en position fermée, obturant ainsi par sa surface principale la dite ouverture et, d'autre part, une pièce (28) formant support mécanique de membrane qui coopère avec ladite membrane, caractérisé en ce que la pièce métallique formant support de membrane possède une surface continue étanche (28a) délimitée par la zone de contact (A) de manière à obturer l'ouverture (16) en cas de non étanchéité de la membrane.

2. Organe selon la revendication 1, dans lequel la pièce (28) formant support de membrane repose en équilibre sur un pivot (30) et est ainsi placée entre la membrane et ledit pivot.

3. Organe selon la revendication 2, dans lequel la pièce formant support de membrane est centrée sur le pivot (30).

4. Organe selon la revendication 2 ou 3, dans lequel le pivot possède un embout (32) à portée sphérique.

5. Organe selon l'une des revendications 2 à 4, dans lequel la pièce (28) formant support de membrane présente en regard du pivot (30) une cavité (28b) dans laquelle vient se loger ledit pivot.

6. Organe selon la revendication 5, dans lequel la membrane (26) est en appui sur la pièce (28) formant support de membrane au droit de la cavité (28b).

7. Organe selon l'une des revendications 1 à 6, dans lequel la pièce (28) formant support de membrane possède une portée tronconique (28e) située en regard de la zone de contact (A).

8. Organe selon l'une des revendications 1 à 7, dans lequel la pièce (28) formant support de membrane a une forme générale de disque.

9. Organe selon la revendication 7, dans lequel la portée tronconique (28e) du disque est disposée entre une partie centrale (28c) et une partie périphérique (28d) sensiblement planes.

10. Organe selon l'une des revendications 2 à 6, dans lequel la pièce (28) formant support de membrane est en contact par une de ses faces avec la membrane (26) et par sa face opposée avec un anneau de maintien (36) emmanché autour d'un élément (34) qui prolonge le pivot (30), ladite membrane formant un capuchon qui recouvre la pièce formant support de membrane et vient enserrer l'empilage constitué par ladite pièce et ledit anneau en recouvrant une partie périphérique de la face de l'anneau qui n'est pas en contact avec ladite pièce.

11. Organe selon l'une des revendications 1 à 10, dans lequel le clapet (18) est relié à un axe de clapet (20 ; 70) aligné suivant une direction longitudinale et mobile suivant cette direction sous l'action d'un moteur (24) entraînant ledit axe de clapet au moyen d'un dispositif d'entraînement mécanique qui laisse à l'axe de clapet un degré de liberté en translation selon cette direction.

12. Organe selon la revendication 11, dans lequel un organe élastique (66) comprimé coopère avec un élément dit fusible (68) réalisé dans un matériau fondant sous l'action de la chaleur de telle façon qu'en dessous de la température de fusion dudit matériau l'organe élastique est maintenu comprimé, et aux environs de la température de fusion du matériau l'organe élastique est libéré et force le clapet (18) à entrer en contact avec le siège de clapet (12a).

13. Organe selon la revendication 12, dans lequel une pièce liée à l'axe de clapet est soumise à l'action de l'organe élastique (66) tendant à rapprocher le clapet (18) du siège de clapet (12a), et est retenue dans sa position au moyen de l'élément fusible (68).

14. Organe selon les revendications 11 à 13, dans lequel l'axe de clapet (20) est fileté et la pièce liée à l'axe de clapet forme un écrou (60) dans lequel est engagé ledit axe de clapet, ladite pièce formant écrou est logée dans un orifice (64) pratiqué dans une embase (62b) et comprend un épaulement (60b), l'organe élastique (66) étant comprimé entre ladite embase et ledit épaulement de manière à exercer sur ladite pièce un effort qui tend à la rapprocher du siège de clapet (12a).

15. Organe selon la revendication 14, dans lequel la pièce formant écrou (60) traverse l'orifice (64) et fait saillie hors de l'embase (62b) du coté opposé où se trouve l'organe élastique (66), l'élément dit fusible (68) étant maintenu en appui contre ladite embase (62b) et exerçant sur ladite pièce un effort qui tend à l'éloigner du siège de clapet (12a).

16. Organe selon la revendication 12, dans lequel l'élément fusible (74) est placé entre le clapet (18) et l'organe élastique (76) qui est en appui sur un support (14b), ledit élément fusible se trouvant en contact direct avec ledit organe élastique (76) pour le maintenir comprimé contre son support.

17. Organe selon la revendication 16, dans lequel l'axe de clapet (70) coulisse dans un palier (22) monté sur le support (14b), et l'élément fusible forme une collerette (74) disposée autour dudit palier, l'organe élastique (76) étant comprimé entre cette collerette et ledit support.

18. Compteur de gaz (11) équipé d'un organe de coupure (10) d'un flux de gaz comprenant un clapet (18) mobile par rapport à un siège de clapet (12a) qui définit une ouverture (16) pour le passage du dit flux de gaz, ledit clapet comprenant, d'une part, une membrane (26) comportant une surface principale qui vient en contact par une partie de celle-ci appelée zone de contact (A) avec ledit siège de clapet lorsque l'organe de coupure est en position fermée, obturant ainsi par sa surface principale la dite ouverture et, d'autre part, une pièce (28) formant support mécanique de membrane qui coopère avec ladite membrane, caractérisé en ce que la pièce métallique formant support de membrane possède une surface continue étanche (28a) délimitée par la zone de contact (A) de manière à obturer l'ouverture en cas de non étanchéité de la membrane.

19. Compteur de gaz selon la revendication 18, dans lequel l'organe de coupure (10) possède les caractéristiques de l'une quelconque des revendications 2 à 17.

## Patentansprüche

1. Organ (10) zur Unterbrechung eines Gasstroms für einen Gaszähler (11) mit einem in bezug auf einen Ventilsitz (12a) beweglichen Ventilelement (18), das eine Öffnung (16) für das Hindurchströmen des Gasstroms begrenzt, wobei das Ventilelement einerseits eine Membran (26) aufweist, die eine Hauptfläche (26a) aufweist, die mit einem Kontaktzone (A) genannten Teil an dem Ventilsitz in Anlage kommt, wenn das Unterbrechungsorgan sich in der geschlossenen Stellung befindet, so daß die Öffnung durch die Hauptfläche geschlossen ist, und andererseits ein eine mechanische Halterung der Membran bildendes Teil (28), das mit der Membran zusammenwirkt, dadurch gekennzeichnet, daß das eine Halterung für die Membran bildende metallische Teil eine dichte durchgehende Fläche (28a) aufweist, die durch die Kontaktzone (A) so begrenzt ist, daß sie die Öffnung (16) schließt für den Fall, daß die Membran undicht ist.

2. Organ nach Anspruch 1, bei dem das eine Halterung für die Membran bildende Teil (28) im Gleichgewicht auf einem Zapfen (30) ruht und somit zwischen der Membran und dem Zapfen liegt.

3. Organ nach Anspruch 2, bei dem das eine Halterung für die Membran bildende Teil auf dem Zapfen (30) zentriert ist.

4. Organ nach Anspruch 2 oder 3, bei dem der Zapfen einen Ansatz (32) mit sphärischem Bereich besitzt.

5. Organ nach einem der Ansprüche 2 bis 4, bei dem das eine Halterung für die Membran bildende Teil eine Vertiefung (28b) aufweist, die dem Zapfen gegenüberliegt und in welcher der Zapfen angeordnet ist.

6. Organ nach Anspruch 5, bei dem die Membran (26) an dem eine Halterung für die Membran bildenden Teil gegenüber von der Vertiefung (28b) in Anlage ist.

7. Organ nach einem der Ansprüche 1 bis 6, bei dem das eine Halterung für die Membran bildende Teil (28) einen kegelstumpfförmigen Bereich (28e) aufweist, der gegenüber der Kontaktzone (A) liegt.

8. Organ nach einem der Ansprüche 1 bis 7, bei dem das eine Halterung für die Membran bildende Teil (28) die allgemeine Form einer Scheibe aufweist.

9. Organ nach Anspruch 7, bei dem der kegelstumpfförmige Bereich (28e) zwischen einem zentralen Teil (28c) und einem am Umfang gelegenen Teil (28d) angeordnet ist, wobei beide Teile im wesentlichen eben sind.

10. Organ nach einem der Ansprüche 2 bis 6, bei dem das eine Halterung für die Membran bildende Teil (28) mit einer seiner Flächen mit der Membran (26) und mit seiner gegenüberliegenden Fläche mit einem Haltering (36) in Kontakt steht, der um ein den Zapfen (30) verlängerndes Element (34) aufgepreßt ist, wobei die Membran eine Kappe bildet, die das eine Halterung für die Membran bildende Teil überdeckt und den aus diesem Teil und dem Ring bestehenden Stapel einklemmt, indem sie einen Teil am Umfang der Seite des Rings überdeckt, die nicht mit dem Teil in Kontakt steht.

11. Organ nach einem der Ansprüche 1 bis 10, bei dem das Ventilelement (18) mit einem entlang einer Längsrichtung ausgerichteten und entlang dieser Richtung unter der Wirkung eines Motors (24) beweglichen Ventilschaft (20; 70) verbunden ist, wobei der Motor den Ventilschaft mittels einer mechanischen Antriebsvorrichtung antreibt, welche dem Ventilschaft eine gewisse translatorische Freiheit entlang dieser Richtung gewährt.

12. Organ nach Anspruch 11, bei dem ein zusammengedrücktes federndes Organ(66) mit einem schmelzbaren Element (68) zusammenwirkt, das aus einem unter Hitzeeinwirkung schmelzenden Material besteht, so daß das federnde Organ unterhalb der Schmelztemperatur des Materials zuzammengedrückt bleibt und in der Nähe der Schmelztemperatur des Material freigegeben wird und dabei das Ventilelement (18) dazu zwingt, mit dem Ventilsitz (12a) in Kontakt zu gelangen.

13. Organ nach Anspruch 12, bei dem ein mit dem Ventilschaft verbundenes Teil der Wirkung eines federnden Organs (66) ausgesetzt ist, das das Ventilelement (18) an den Ventilsitz (12a) anzunähern sucht, wobei das Teil mittels eines schmelzbaren Elements (68) in seiner Stellung gehalten ist.

14. Organ nach den Ansprüchen 11 bis 13, bei dem der Ventilschaft (20) ein Außengewinde aufweist und das mit dem Ventilschaft verbundene Teil eine Mutter (60) bildet, in welche der Ventilschaft eingreift, wobei das die Mutter bildende Teil in einer in einer Grundplatte (62b) angebrachten Öffnung (64) gelagert ist und eine Schulter (60b) aufweist, wobei das federnde Organ (66) zwischen der Grundplatte und der Schulter zusammengedrückt ist, um auf das Teil eine Kraft auszuüben, die es näher an den Ventilsitz (12a) zu bringen sucht.

15. Organ nach Anspruch 14, bei dem das die Mutter (60) bildende Teil durch die Öffnung (64) hindurchgeht und aus der Grundplatte (62) auf der Seite herausragt, die der Seite gegenüberliegt, an der sich das federnde Organ befindet, wobei das schmelzbare Element (68) in Anlage an der Grundplatte (62b) gehalten ist und auf das Teil eine Kraft ausübt, die es vom Ventilsitz (12a) zu entfernen sucht.

16. Organ nach Anspruch 12, bei dem das schmelzbare Element (74) zwischen dem Ventilelement (18) und dem federnden Organ (76) liegt, das auf einem Träger (14b) in Anlage ist, wobei das schmelzbare Element sich in unmittelbarem Kontakt mit dem federnden Organ (76) befindet, um es gegen dessen Träger zusammengedrückt zu halten.

17. Organ nach Anspruch 16, bei dem der Ventilschaft (70) in einem auf dem Träger (14b) angebrachten Lager (22) gleitet und das schmelzbare Element einen Bund (74) bildet, der um das Lager angeordnet ist, wobei das federnde Organ (76) zwischen diesem Bund und dem Träger zusammengedrückt ist.

18. Gaszähler (11), ausgestattet mit einem Organ (10) zur Unterbrechung eines Gasstroms, mit einem in bezug auf einen Ventilsitz (12a) beweglichen Ventilelement (18), das eine Öffnung (16) für das Hindurchströmen des Gasstroms begrenzt, wobei das Ventilelement einerseits eine Membran (26) aufweist, die eine Hauptfläche (26a) aufweist, die mit einem Kontaktzone (A) genannten Teil an dem Ventilsitz in Anlage kommt, wenn das Unterbrechungsorgan sich in der geschlossenen Stellung befindet, so daß die Öffnung durch die Hauptfläche geschlossen ist, und andererseits ein eine mechanische Halterung der Membran bildendes Teil (28), das mit der Membran zusammenwirkt, dadurch gekennzeichnet, daß das eine Halterung für die Membran bildende metallische Teil eine dichte durchgehende Fläche (28a) aufweist, die durch die Kontaktzone A so begrenzt ist, daß sie die Öffnung (16) schließt für den Fall, daß die Membran undicht ist.

19. Gaszähler nach Anspruch 18, bei dem das Unterbrechungsorgan (10) die Merkmale eines der Ansprüche 2 bis 17 aufweist.

## Claims

1. A gas flow interrupter (10) for a gas meter (11) comprising a valve member (18) that is movable relative to a valve seat (12a) which defines an opening (16) for passing said gas flow, said valve member comprising firstly a membrane (26) having a main surface (26a) including a "contact zone" portion (A) that comes into contact with said valve seat when the interrupter is in its closed position, thereby closing said opening by means of the main surface of the valve member, and secondly a part (28) that forms a mechanical support for the membrane and that co-operates with said membrane, characterized in that the metal part forming a support for the membrane has a continuous leakproof surface (28a) bounded by the contact zone (A) so as to close the opening (16) in the event of the membrane failing to provide sealing.

2. An interrupter according to claim 1, in which the part (28) forming a support for the membrane rests in equilibrium on a pivot (30) and is thus placed between the membrane and said pivot.

3. An interrupter according to claim 2, in which the part forming a support for the membrane is centered on the pivot (30).

4. An interrupter according to claim 2 or 3, in which the pivot has an endpiece (32) with a spherical bearing surface.

5. An interrupter according to any one of claims 2 to 4, in which the part (28) forming a support for the membrane has a cavity (28b) facing the pivot (30) and in which said pivot is received.

6. An interrupter according to claim 5, in which a portion of the membrane (26) in register with the cavity (28b) bears against the part (28) forming a support for the membrane.

7. An interrupter according to any one of claims 1 to 6, in which the part (28) forming a support for the membrane possesses a frustoconical bearing surface (28e) situated facing the contact zone (A).

8. An interrupter according to any one of claims 1 to 7, in which the part (28) forming a support for the membrane is generally in the form of a disk.

9. An interrupter according to claim 7, in which the frustoconical bearing surface (28e) of the disk is disposed between a central portion (28c) and a peripheral portion (28d) which are both substantially plane.

10. An interrupter according to any one of claims 2 to 6, in which the part (28) forming a support for the membrane is in contact with the membrane (26) via one of its faces, and via its opposite face it is in contact with a holding ring (36) engaged around an element (34) extending the pivot (30), said membrane forming a cap which covers the part forming a support for the membrane and which encompasses the stack constituted by said part and by said ring, covering a peripheral portion of the face of the ring which is not in contact with said part.

11. An interrupter according to any one of claims 1 to 10, in which the valve member (18) is connected to a valve shaft (20; 70) extending along a longitudinal direction and mounted to move in said direction under drive from a motor (24) driving said valve shaft by means of a mechanical drive device which leaves the valve shaft with a degree of freedom to move in translation along said direction.

12. An interrupter according to claim 11, in which a compressed resilient member (66) co-operates with a "fuse" element (68) made of a material that melts under the action of heat so that below the melting temperature of said material the resilient member is held in a compressed state, and at around the melting temperature of the material, the resilient member is released and forces the valve member (18) to come into contact with the valve seat (12a).

13. An interrupter according to claim 12, in which a part tied to the valve shaft is subjected to the force of the resilient member (66) urging the valve member (18) towards the valve seat (12a), and is held in position by means of the fuse element (68).

14. An interrupter according to claims 11 to 13, in which the valve shaft (20) is threaded and the part tied to the valve shaft forms a nut (60) in which said valve shaft is engaged, said nut-forming part is received in an orifice (64) formed through a base (62b) and it includes a shoulder (60b), the resilient member (66) being compressed between said base and said shoulder so as to exert a force on said part that urges it towards the valve seat (12a).

15. An interrupter according to claim 14, in which the nut-forming part (60) passes through the orifice (64) and projects beyond the base (62b) away from the side where the resilient member (66) is located, the fuse element (68) being held pressing against said base (62b) and exerting a force on said part holding it away from the valve seat (12a).

16. An interrupter according to claim 12, in which the fuse element (74) is placed between the valve member (18) and the resilient member (76) which bears against a support (14b), said fuse element being in direct contact with said resilient member (76) to hold it compressed against its support.

17. An interrupter according to claim 16, in which the valve shaft (70) slides in a bearing (22) mounted on the support (14b), and the fuse element forms a collar (74) disposed around said bearing, the resilient member (76) being compressed between said collar and said support.

18. A gas meter (11) fitted with a gas flow interrupter (10), comprising a valve member (18) that is movable relative to a valve seat (12a) which defines an opening (16) for passing said gas flow, said valve member comprising firstly a membrane (26) having a main surface including a "contact zone" portion (A) that comes into contact with said valve seat when the interrupter is in its closed position, thereby closing said opening by means of the main surface of the valve member, and secondly a part (28) that forms a mechanical support for the membrane and that co-operates with said membrane, characterized in that the metal part forming a support for the membrane has a continuous leakproof surface (28a) defined by the contact zone (A) so as to close the opening in the event of the membrane failing to provide sealing.

19. A gas meter according to claim 18, in which the interrupter (10) possesses the characteristics of any one of claims 2 to 17.
